# EUROPEAN PATENT SPECIFICATION

(11) **EP 0 593 489 B1**
(45) Date of publication and mention of the grant of the patent: **17.12.1997**
(21) Application number: 92904735.5
(22) Date of filing: 22.10.1991
(51) Int. Cl.: F16K 11/076, F16K 11/087

(54) **MIXER VALVE HAVING A BALL VALVE ELEMENT**
MISCHVENTIL MIT EINEM KUGELFOERMIGEN VENTILEMENT
ROBINET MITIGEUR COMPRENANT UN BOISSEAU SPHERIQUE

(30) Priority: 11.06.1991 IT TO910439
(43) Date of publication of application: 27.04.1994
(73) Proprietor: MASCO CORPORATION, Taylor, MI 48180 (US)
(72) Inventor: KNAPP, Alfons, D-7950 Biberach/Riss (DE)
(74) Representative: Oppermann, Ewald, Dipl.-Ing.
(86) International application number: US9107816
(87) International publication number: WO9222765

(56) References cited:
- EP-A- 0 055 506
- EP-A- 0 418 956
- US-A- 4 043 359
- US-A- 4 305 419
- US-A- 5 040 566

## Description

### Technical Field

This invention relates to a mixer valve for liquids incorporating a ball valve element and more particularly to a ball valve mechanism that has pivotable motion about a fixed longitudinal axis of the valve body.

### Background of the Invention

Single handle faucets, commonly referred to as mixer valves, that control both hot and cold water flow have seen vast consumer acceptance. These faucets are commonly constructed such that a handle or knob is movable in two distinct directions to adjust the mix of hot and cold water and to adjust the volume or flow rate.

The two basic types of mixer valves that have seen widest commercial acceptance are plate valves and ball valves. While ball valves offer a reliable one piece construction that is durable and easily assembled, plate valves offer a drive mechanism that allows motion of the handle in two desirable directions that appears to be universally accepted by the consumer. This desirable handle motion allows for an orbiting motion of the handle about a fixed longitudinal axis of the valve body and a rocking, i.e. pivoting, motion about a movable horizontal axis relative to the valve body. The horizontal axis is fixed with respect to the handle and is perpendicular to the longitudinal axis of the valve body. The one distinguishing characteristic of this type of handle motion is that when the handle is pivoted to an off position, the desired mix ratio of hot and cold water can be remembered by the location of the handle so that when the faucet is turned back on, the same mix of hot and cold water flows through the faucet.

Recently, ball valves have been devised that allow the handle to be operated in the same fashion as the commercially accepted plate type mixer valve. These ball type mixer valves require the introduction of another moving part in the form of a rotatable plate mounted above the ball valve element. Furthermore, these ball valves have been combined with plate devices which can be adjustably positioned about a cover opening through which the handle controls the ball valve to limit the total flow rate. Alternately or in addition, these limiting devices limit the maximum ratio of hot water to cold water and consequentially the maximum temperature of the mixed water at the outlet.

Various disadvantages arise when a ball valve is constructed such that its stem moves similarly to most plate type mixer valves. In particular, the ball valve element is mounted between elastomeric inlet seals positioned about the inlet ports of the valve body and a sealing gasket that is mounted under the valve cover or cap. The elastomeric inlet seals and gasket are all yielding and render a floating characteristic to the ball valve element between the valve body and cap. There is no positive lock or locator mechanism that securely positions the ball valve in place. Because the ball valve can be moved in a translational manner against the elastomeric elements, the operator when operating the handle can also move the handle a small amount in any direction including directions not contemplated in the design of the mixing valve. This unwanted motion renders a undesirable spongy feel to the operation of the faucet and an uncertainty to the operator as to the proper operation of the faucet. Furthermore, the spongy feel of the handle gives the impression that the handle is unstable and not assembled properly.

In order to reduce these disadvantages, a regulation ring has been incorporated in many ball valve mixing valves. The regulation ring is adjustably screwed onto the valve cap. The regulation ring pushes the sealing gasket downward against the ball valve element which in turn is pressed against the inlet seals. The downward placement of the sealing gasket and ball valve element reduces the undesirable motion but does not eliminate it. Furthermore, the combining of the regulation ring with known guide mechanisms which limit the handle's directional movement and with plate devices which limit the flow rate and temperature is unduly complicated and expensive.

Document US-A-4043359, which forms the basis for the preamble of the claims 1 and 19, illustrates a ball valve faucet that has a ball element with a slot therein that receives a pin extending from the valve body. The slot and pin constrain motion of the ball member about a horizontal axis coinciding with the pin and a movable axis that is orthogonal to the axis of the slot in the ball. The movable axis is also either horizontal or forms an acute angle with the horizontal plane.

Document EP-A-418956, which forms the basis for the preamble of claim 22 and 25, discloses a ball valve faucet that allows the handle to be operated in the same fashion as the above described plate type mixer valve by having a square control stem and rotatable plate member with a slot that receives the control stem. In this document, the valve cartridge has the inlet passages passing therethrough and forming a frusto-conical surface that fits within a complementary shaped cavity in the valve body. The ports in the valve body are bent such that their respective downstream ends are coaligned with the respective inlet ports in the cartridge.

What is needed is a ball valve type mixer valve that duplicates the handle motion of known plate valves that provide for swinging of the handle about the longitudinal axis of the valve body while retaining the advantage of having only one movable piece to operate the valve, in other words, without the introduction of a separate moving part. What is also needed is a ball valve assembly of the described type that eliminates the need for a regulation ring and provides for a valve that eliminates the possibility of the handle moving in a fashion that is different from that needed for its proper operation.

### Summary of the Disclosure

The invention is defined by the independent claims 1, 19 22 and 25. Preferred embodiments are defined by the dependent claims.

In accordance with one aspect of the invention, a mixer valve for liquids has a ball valve pivotably mounted in a valve receiving cavity of a housing. The cavity is in fluid communication with a plurality of inlet ports and at least one outlet port. The ball valve has at least a partially spherical surface and a plurality of openings in said surface. The openings cooperate with the ports to control fluid flow through the ports. The valve housing has a control opening with the longitudinal axis of the valve housing passing through the control opening. The ball valve has a first projection extending through the control opening and functions as a control stem or valve handle. The ball valve has a second projection extending therefrom and engages a slot in the valve body. The slot and second projection are positioned and angled such that the ball valve is constrained to pivotable motion about the longitudinal axis and about an axis perpendicular to the longitudinal axis.

Preferably, the second projection is perpendicular to the first projection with its axis intersecting the center of the ball valve. The slot is formed between a valve base member and valve cover and has its axis lying in a plane perpendicular to handle the longitudinal axis of the valve housing.

According to another aspect of the invention, a ball valve has at least a partially spherical valve surface. The ball valve has a first projection extending therefrom for driving the ball valve when mounted in a valve housing. One of the ball valve or housing has a second projection extending therefrom that is constructed to constrain the motion of the ball valve in certain directions when mounted in a valve housing. In one embodiment the second projection is formed by a pin passing through the ball valve and having at least one distal end positioned to the exterior of the at least partially spherical valve surface. In one embodiment the pin has two distal ends projecting to the exterior of the valve surface and being positioned one hundred and eighty degrees apart on the valve surface. The pin passes through the center of the ball valve. Each pin end is received in a horizontally disposed slot of the housing. Each slot is perpendicular to the longitudinal axis of the valve housing. Preferably, the pin is cylindrical and is pivotable within the horizontal slots. The slots have a width and the pin has a diameter that provides relatively little clearance along the direction of the valve longitudinal axis such that the ball valve is fixed with respect to the valve housing along the longitudinal axis.

In accordance with a broader aspect of the invention, one of the ball valve and valve housing includes a mechanism affixed thereto that constrains the motion of the ball valve element with respect to the valve housing about a longitudinal axis of the housing and about an axis of the ball valve that is perpendicular to the longitudinal axis.

According to another aspect of the invention, a ball valve is received in a valve cavity defined by upper and lower valve body members that form a cartridge that is receivable in a valve base member. The valve lower body member has at least two inlet ports each having an axis that intersects the center of the ball valve . The lower valve body member has a lower surface that lies in a contour surface which intersects the longitudinal axes of the ports at a perpendicular angle. Preferably, the contour has a frustum shape and the valve base member has a complementarily shaped surface to seat the lower outer surface of the lower body member. The base member has inlet ports and an outlet port aligned with respective ports of the lower valve body member. The cartridge has the two slots defined between the junction of the lower and upper body members. The ball valve has a pin passing therethrough and engaging the two slots.

With the above mentioned arrangement, the ball valve element is allowed to freely rotate around the axis of the cylindrical pin when the control stem is tilted. The ball valve is also allowed to rotate about the longitudinal axis of the valve housing when the control stem is similarly rotated. On the other hand, the ball valve member cannot vertically move due to the small clearance between the slot and pin. This arrangement eliminates any rocking motion of the handle in a direction other than in its intended fashion.

### Brief Description of the Drawings

Reference now is made to the accompanying drawings in which:
Figure 1 is a side elevational and segmented view of a mixer valve illustrating one embodiment of the invention;
Figure 2 is a cross-sectional view taken along line 2-2 shown in Figure 1;
Figure 3 is a side elevational and segmented view of another embodiment disclosing a cartridge for a mixer valve;
Figure 4 is cross-sectional view taken along line 4-4 shown in Figure 3;
Figure 5 is a bottom plan view of the lower body member shown in Figure 3;
Figure 6 is a side elevational and segmented view of the cartridge shown in Figure 3 installed in a valve base member;
Figure 7 is top plan view of the valve base member shown in Figure 6;
Figure 8 is a view similar to Figure 6 disclosing a third embodiment;
Figure 9 is an exploded and schematic view of a ball valve element shown in Figure 1; and
Figure 10 is a view similar to Figure 9 disclosing a second embodiment of the ball valve element.

### Detailed Description of the Preferred Embodiments

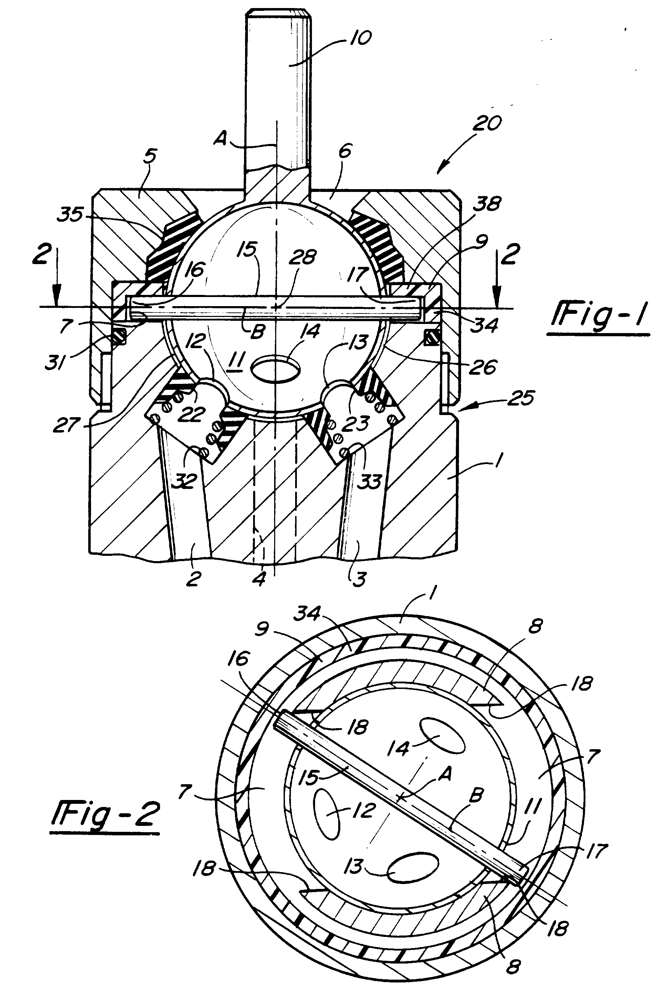

Referring to Figures 1 and 2, a mixing valve 20 includes a valve housing 25 that is formed from a lower base member 1 and a cover 5. The base member has two inlet ports 2 and 3 for hot and cold water and has an outlet port 4 for the passage of mixed water. The cover 5 is screwed onto the base member 1 to form a valve cavity 26 that is substantially spherical in shape to receive a ball valve element 11. The valve housing has a longitudinal axis A that passes through the cavity 26.

The ball valve element 11 has a substantially spherical valve surface 27 with openings 12, 13 and 14 therethrough which cooperate with the inlet ports 2 and 3 and outlet port 4 respectfully to regulate the passage of water from the two inlet ports 2 and 3 to the outlet port 4 by regulating the mixture ratio from the two inlet ports 2 and 3 and the flow rate, i.e. volume of total water per unit time. The valve cover 5 has a control opening 6 therethrough. The cover 5 is positioned such that the longitudinal axis A of the housing passes through the control opening 6. A control stem 10 extends through the control opening 6. The control stem 10 is fixedly connected to the ball valve element 11. The control stem 10 is constructed to be attached to a faucet handle (not shown) in a conventional fashion. The downstream ends of ports 2 and 3 are counter-bored to form a seat for two biasing springs 32 and 33 which bias tubular elastomeric sealing elements 22 and 23 against the ball valve surface 27. A sealing gasket 35 is interposed between the ball valve 11 and the valve cover 5 about control opening 6.

The ball valve element 11 also has a cylindrical pin 15 extending therethrough with its distal ends 16 and 17 positioned to the exterior of valve surface 27. The pin 15 is positioned to intersect the center 28 of ball valve 11 and lie perpendicular to control stem 10. The pin can be welded in place as described in more detail later. Each distal end 16 and 17 is positioned in a circumferentially disposed slot 7 formed between base member 1 and cover 5. Each slot 7 has a central axis disposed in a plane pependicular to axis A. Because the ends 16 and 17 are cylindrical in shape, they have a circular cross-section that allows them to pivot in slots 7. The base member 1 has an upright collar 8 that is milled out at two circumferential positions. The circumferential ends 18 of the collar sections 8 form stop shoulders 18 for the distal ends 16 and 17. An angular ring 9 having a circumferential wall 34 and flat top wall 38 is placed over the collar 8 and distal ends 16 and 17. The ring 9 is retained in place by cover 5. Ring 9 and base member 1 may be constructed such that ring 9 snap fits onto base member 1. The slots 7 are vertically dimensioned to form only enough clearance to allow sliding movement of the pin 15 in slot 7. Desirably no vertical spacing exists between slot 7 and the ends 16 and 17. A conventional ring seal 31 is operably interposed between the base member 1 and cover 5.

The cylindrical distal ends 16 and 17 form a pivot axis B for ball valve element that is perpendicular to the longitudinal axis A of valve housing 25. Rocking of the control stem along a plane containing the longitudinal axis A pivots the ball valve element 11 about the pivot axis B independently of the rotated position of the ball valve member about axis A. Furthermore, the distal ends 16 and 17 may slide along slots 7 to allow the ball valve element 11 to rotate about axis A when the control stem 10 is swung about the longitudinal axis A.

The rotation of the ball valve element 11 about axis A is limited by the position of the stop shoulders 18 that abut the distal ends 16 and 17. Mixer valves having different applications may have different rotation angles established by the circumferential positioning of stop shoulders 18. The rotation of the ball valve element 11 as illustrated adjusts the ratio mix and thus the temperature of the discharged mixed water. As shown in Figure 2, the distal ends 16 and 17 extend radially beyond collar 8 and end adjacent the circumferential wall 34 of angular ring 9. Alternately, the circumferential wall 34 or the upper wall 38 of the angle ring 9 may have the stop shoulders 18 affixed thereto. The ring 9 may be adjustably positioned in place to adjust the rotational extent of travel of ball valve element 11 about axis A. The stop shoulders 18 may extend radially inward from the circumferential wall 34 or depend downwardly from the upper wall 38 of angular ring 9 to abut ends 16 and 17.

The minimum clearance between ends 16 and 17 and slots 7 in the vertical direction prevents vertical displacement of the ball valve element 11 with respect to the valve housing 25. Consequently, the control stem does not show any instability or render a spongy feel to the operator when the ball is pivoted along its two prescribed pivotable directions. The need for a regulation ring intended to push down gasket 35 and ball valve element 11 is eliminated. Furthermore, any movable guide ring member that has previously been needed in control opening 6 to limit the degrees of motion of the control stem 10 is also eliminated.

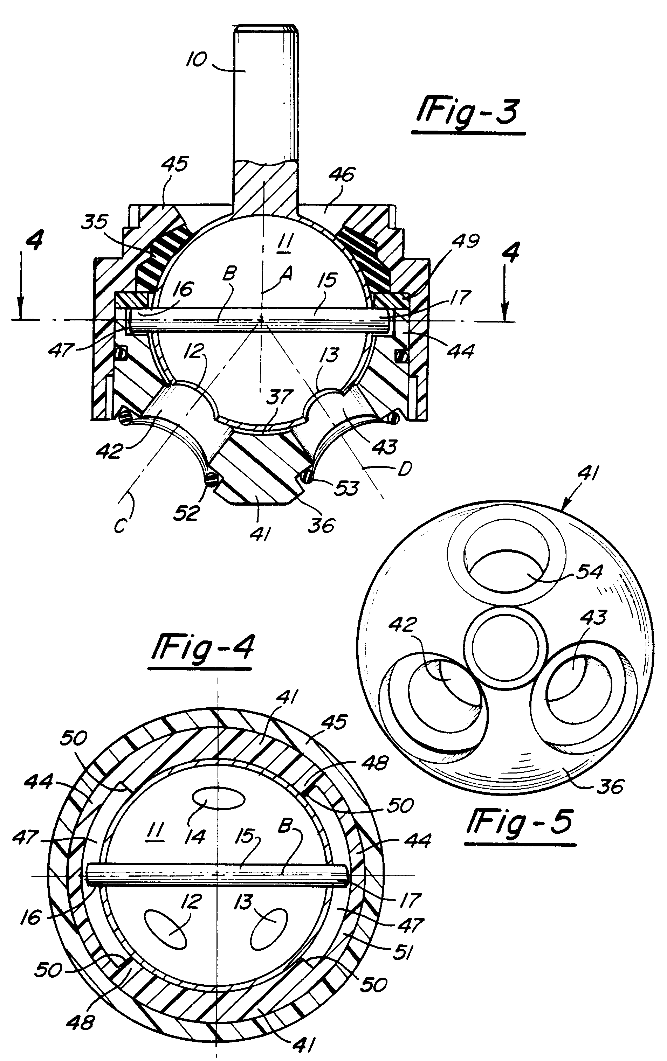

Figures 3, 4, 5 and 6 illustrate a cartridge 30 for the invention which may be assembled in a valve housing 25 adapted to receive a cartridge 30. The cartridge 30 is formed from a lower body member 41 and upper body member 45 which may be manufactured from known plastic material suitable for faucet applications. The upper body member 45 is connected to the lower body member in known fashion such as screwing, snap fitting, or welding. The lower body member has cylindrical inlet ports 43 and 45 passing straight through a bottom section of the lower body member. The axes C and D of the ports 43 and 45 intersect the center 28 of the ball valve element 11. The lower body member also has a outlet duct 54 passing therethrough. The lower body member has a lower surface 36 that has a frustum shape. The inlet ports 43 and 45 and outlet duct 54 pass through lower frustum surface 36. The axes C and D intersect the frustum contour at a perpendicular angle. By having cylindrical ports 43 and 45 being perpendicular to frustum shaped surface 36 and arranged to intersect the center of ball valve element 11, the axes C and D of the ports 43 and 45 also intersect the contour of the cavity surface 37 at a right angle and provides conventional circular seal rings 22 and 23 and springs 32 and 33 to be operable within ports 43 and 45. The ports are straight with no bends and are easily molded into a body member 41 made from plastic.

Ports 42 and 43 are counter-bored to seat packing seals 52 and 53. The lower body member 41 has a peripheral upstanding circumferential wall 44 that has thin sections 51 and radially thicker sections 48. The thicker sections 48 form stop shoulders 50 at circumferential ends of slots 47 that are positioned radially inside the thin sections 51. Pin 15 of ball valve element 11 has a length to fit between the opposing thin sections 51 with only a slight clearance.

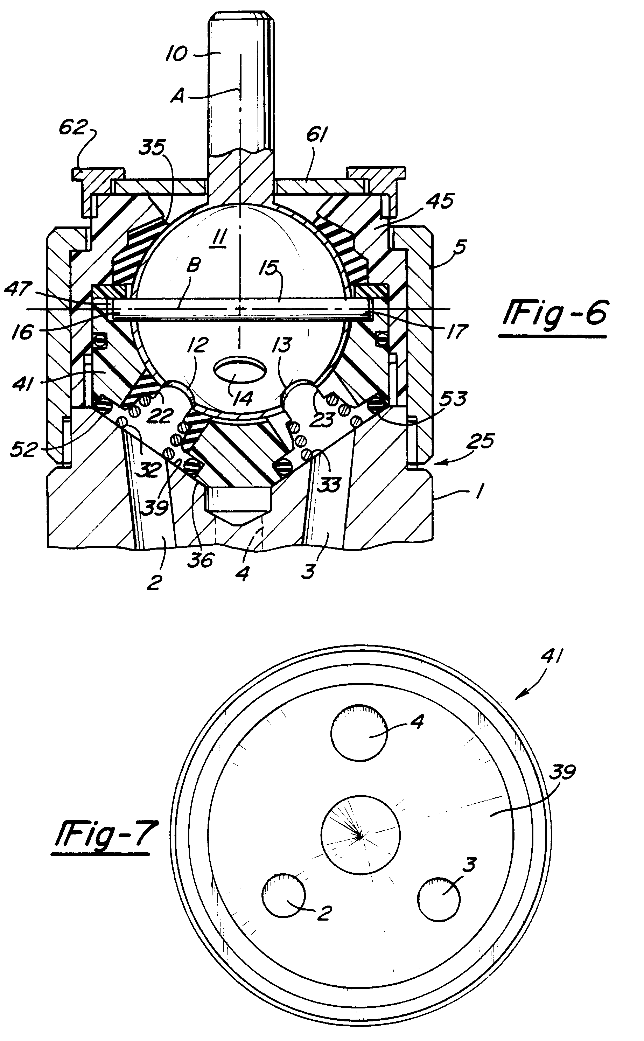

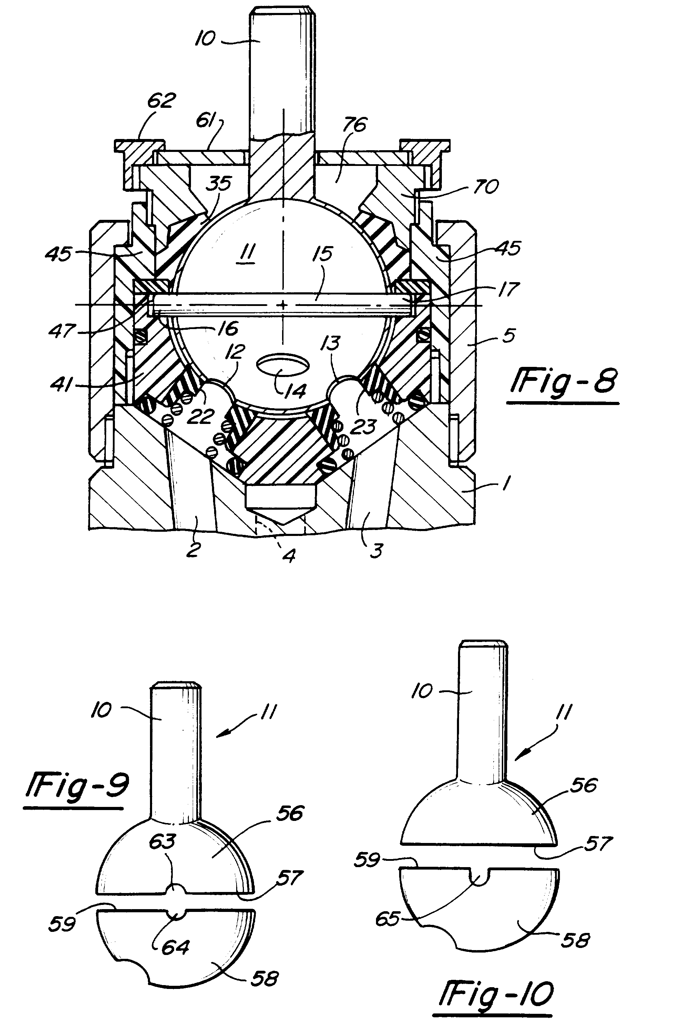

The slot 47 has its upper side defined by a flat ring 49 that is positioned at the top of peripheral wall 44 and interposed between lower body member 41 and upper body member 45. Control opening 46 passes through the upper body member 45. The cartridge 30, as shown in Figure 6, is received in valve housing 25 which includes a valve base member 1 and cap 5. The outlet port 44 of cartridge 30 is aligned with port 4 in base member 1 and inlet ports 42 and 43 are aligned with inlet ports 2 and 3. The packing seals 52 and 53 create sealed inlet passages between the base member 1 and cartridge 30. Referring to Figures 6 and 7, the base member 41 has a frustum shaped surface 39 which seats the frustum shaped surface 36 of the lower body member 41. The surfaces 36 and 39 may have other complementary shapes other than a frustum as long as the contour intersects the axes C and D at substantially right angles.

An optional plate device 61 is mounted above the upper body member 45 to limit the angular displacement of ball valve element 11 and the corresponding movement of the control stem for limiting the maximum temperature and/or the maximum flow rate which may be discharged through outlet port 4. The known plate device 61 can be mounted by a retaining ring 62 which is screwed onto the upper body member 45.

In certain applications, it may be desirable to continue use of a regulation ring 70 as illustrated in Figure 8. The regulation ring can be used where compensation is needed for possible defects in manufacturing tolerances. The control opening 76 in this embodiment extends through the regulation ring 70 which in turn is threaded onto the upper body member 45. The regulation ring when adjustably screwed into upper body member 45 presses down on sealing gasket 35 which abuts against ball valve element 11. The plate device 61 with its retaining ring 62 is also usable with the regulation ring. The retaining ring 62 is screwed onto the regulation ring 70.

Other variations are possible. It is foreseen that a plate device 61 or regulation ring 70 may be applied to a non-cartridge type valve and attached to the cover 5 rather that the upper body member 45. It is also foreseen that stop shoulders which limit the rotation of the ball valve about the longitudinal axis A may be incorporated into the cover 5 or upper body member 45. In such cases the ring 9 or ring 49 may be omitted.

The ball valve element may be constructed also in several foreseen ways. The pivot projections 16 and 17 may be separate members that are welded or otherwise adhered to the ball valve. The preferred method of inserting a pin 15 through the ball valve element offer several advantages. The pin needs to extend through corresponding holes 18 in the ball valve element. These holes may be drilled. However Figures 9 and 10 illustrate two ways which eliminate the need for drilling. Figure 9 illustrates a ball valve member constructed from two drawn halves 56 and 58 that are then coupled together by welding. The bottom half 58 is preferably made from stainless steel. The mating edges 57 and 59 of each half include a pair of semi-circular notches 63 and 64 that when aligned and mated together form holes 18. The cylindrical stem 15 may be fixed in place by welding, press fit, adhesion or may be left free to pivot about in holes 18.

The modification shown in Figure 10 shows a deeper notch 65 shown in lower half 58 only. This notch is deep enough to receive the cylindrical pin 15. In this fashion, the upper half 56 does not need to be notched. Because the equatorial region of the ball valve element 11 is not operative for valve purposes, the region may be distorted for assembly purposes into a cylindrical region that may have a radius smaller that the radius of the spherical portion of the valve surface.

In this fashion, an effective guide for a ball type mixer valve is inexpensively and simply incorporated in the valve. The invention obviates the disadvantages due to the floating characteristic of previously known ball valves and eliminates the installation difficulties of regulation plates and other plate devices needed in previously known ball type mixer valves. In addition, a ball type mixer valve can have its control stem move in the same fashion as known plate valves with one of the degrees of free movement being about the longitudinal axis of the valve housing without the addition of any separate moving parts. Furthermore, the ball type mixer valve according to the above described construction provides for a valve that can be easily modified to limit the maximum temperature or maximum flow rates by slight constructive modification in an economical manner.

Other variations and modifications are possible within the scope of the foregoing disclosure, drawings, and claims without departing from the invention as defined by the appended claims.

## Claims

1. A mixer valve (20) for liquids having a ball valve (11) pivotably mounted in a valve receiving cavity (26) of a valve body (25), said body having a plurality of ports (2, 3, 4) in fluid communication with said cavity, said ball valve having a plurality of openings (12, 13, 14) in an outer at least partially spherical valve surface (27), said openings cooperating with said ports to control liquid flow through said ports, said valve body having a control opening (6) therethrough with a longitudinal axis of said valve body passing through said control opening, said ball valve having a first projection in the form of a control stem (10) connected thereto and extending through said control opening, one of said valve body and said ball valve having a second projection (16) extending therefrom and engaging a slot (7) in the other of said valve body and said ball valve;
characterised in that
said second projection (16) and slot (7) is positioned and angled such that said ball valve is constrained to pivotable motion about said longitudinal axis and about an axis perpendicular to said longitudinal axis.

2. A mixer valve as defined in claim 1 further comprising;
said second projection (16) extending from said ball valve.

3. A mixer valve as defined in claim 2 further comprising;
said second projection (16) being formed by a distal end of a pin (15) that passes through said ball valve.

4. A mixer valve as defined in claim 2 further comprising;
said slot (7) being recessed in said valve body and having its central longitudinal axis disposed in a plane that is perpendicular to said longitudinal axis.

5. A mixing valve as defined in claim 4 further comprising;
said pin (15) being rigidly affixed to said ball valve.

6. A mixing valve as defined in claim 4 further comprising;
said valve body (25) including a valve cap (5) being connected to a valve base member (1);
said valve cap having said access control opening therethrough;
said slot being defined between a junction of said valve cap and said valve base member; and
said slot having a limited circumferential direction about said longitudinal axis of said valve body with shoulders (18) at circumferential ends of said slot to define stops for movement of said second projection about said longitudinal axis.

7. A mixer valve as defined in claim 6 further comprising:
said shoulders being formed by an annular upright collar (8) of said valve base member having inwardly extending shoulders (18).

8. A mixer valve as defined in claim 6 further comprising;
said shoulders (18) being formed by a partially annular collar (8) extending upright from said valve base member to said access control opening with circumferential ends (18) of said collar being spaced apart to partially form said slot (7) therebetween with opposing circumferential ends of said collar forming said shoulders to define said stops for said second projection (16).

9. A mixer valve as defined in claim 1 further comprising;
said mixer valve being in cartridge form with a cartridge (30) having a lower body member (41) and upper body member (45) connected together and defining said cavity for said ball valve; and
said cartridge being received in a valve base member (1) and retained therein by a valve cap member (5).

10. A mixer valve as defined in claim 9 further comprising;
said lower body member having two inlet ports and an outlet port, each of said inlet ports (43, 45) having a longitudinal axis intersecting the center of said ball valve; and
said lower valve body member having a lower outer surface (36) with a contour such that a central axis of each inlet port intersects said lower outer surface contour at a perpendicular angle.

11. A mixer valve as defined in claim 10 further comprising;
said lower outer surface (36) being frustum shaped;
said valve base member (1) having a complementarily shaped surface (39) to seat said lower outer surface;
said valve base member having inlet ports and an outlet port in fluid aligned with the respective ports of said lower valve body member; and
a seal (52, 53) operably positioned about each inlet and outlet port and interposed between said valve base member (1) and said valve lower body member (41) to form sealed passages through said valve base member and valve lower body member.

12. A mixer valve as defined by claim 9 further comprising:
said slot being formed between said lower and upper valve body members (41, 45); and
said second projection (16) extending from said ball valve.

13. A mixer valve as defined in claim 12 further comprising;
a plate device (61) constructed for limiting the control field of the valve being mounted to said upper body member (45) of said cartridge.

14. A mixer valve as defined in claim 9 further comprising;
a regulation ring (70) constructed to control the pressure exerted on a gasket (35) interposed between the ring (70) and the ball valve (11) being mounted on said upper valve body (45).

15. A mixer valve in accordance to claim 14 further comprising;
said regulation ring (70) having a mounting means for mounting a plate device (61) constructed for limiting the control field of the valve.

16. A mixer valve as defined in claim 1 further comprising;
a plate device (61) constructed for limiting the control field of the valve being mounted in said access control opening (76).

17. A mixer valve as defined in claim 1 further comprising;
a regulation ring (70) constructed to control the pressure exerted on a gasket (35) interposed between the ring (70) and the ball valve (11) being mounted about said access control opening (76).

18. A mixer valve in accordance to claim 17 further comprising;
said regulation ring (70) having a mounting means for mounting a plate device (61) that is constructed for limiting the control field of the valve.

19. A ball valve for a mixer valve, with a ball having a substantially spherical shaped valve surface (27); a plurality of openings (12, 13, 14) in said valve surface located at a fixed location on said valve surface and in fluid communication with each other; a first projection (10) extending from said valve surface and located at a fixed location on said valve surface for driving said ball valve when mounted in a valve body; characterised in that: a second projection (16) is extending from said valve surface and is located at a fixed location on said valve surface (27) for constraining motion of said ball valve when mounted in a valve body;
said second projection (16) is formed by a pin (15) passing through said ball valve and has at least one distal end (16, 17) positioned to the exterior of the spherical valve surface; and
said pin (15) is positioned perpendicular to said first projection (10) and is extending from said ball valve substantially at 90 degrees from the position of said first projection.

20. A ball valve as defined in claim 19 further comprising;
said pin (15) being rigidly affixed to said ball valve.

21. A ball valve as defined in claim 19 further comprising;
said pin (15) passing through said ball valves and centrally positioned to pass through the center of said ball valve.

22. A ball valve cartridge (30) for a mixer valve, said cartridge having a lower body member (41) and upper body member (45) constructed to be connected together; said lower body member having an internal partially spherical valve surface (37) which forms a ball valve receiving cavity in conjunction with said upper valve body member; said lower body member having at least two straight inlet ports (42, 43, 54) therethrough which are free of bends, said ports being positioned below the center of said ball valve receiving cavity and each having a longitudinal axis intersecting the center of said ball valve cavity; said lower outer surface (36) being frustum shaped; characterised in that:
said lower and upper body members define a slot (47) at a junction therebetween;
and
said slot (47) is sized to receive a distal end (16) of a pin (15) extending from a ball valve member (11) when seated in said ball valve receiving cavity.

23. A ball valve cartridge for a mixer valve as defined in claim 22 further comprising;
a ball valve member (11) having a control stem (10) extending outwardly therefrom and through a control opening (46) in said upper body member (45); and
said ball valve member having said pin (15) extending therefrom at a substantially perpendicular position from said control stem and being received in said slot (47) of said cartridge.

24. A ball valve cartridge for a mixer valve as defined in claim 23 further comprising;
said pin being affixed to said ball valve member; and
said distal end (16, 17) of said pin being circular in cross section to be pivotable in said slot.

25. A mixing valve, comprising:
a valve body (25) having a cartridge receiving chamber;
a replaceable cartridge (30) being seated in the chamber of said valve body (25), said cartridge (30) having a ball valve receiving cavity (37);
a ball valve (11) pivotably mounted in said ball valve receiving cavity (37);
said cartridge (30) having at least two inlet ports (42, 43) passing straight therethrough and free of bends with each port having a longitudinal axis intersecting the center of said ball valve receiving cavity (37);
said cartridge (30) having a lower outer surface (36) with a contour and positioned such that said axes of said inlet ports (42, 43) intersect the lower surface contour at a perpendicular angle;
said valve body (25) having fluid inlets (2, 3) passing therethrough and having a surface (39) complementarily shaped with respect to said lower surface (36) of said cartridge (30), which seats said cartridge lower surface (36);
said fluid inlets (2, 3) of said valve body (25) being in fluid communication with respective inlet ports (42, 43) in said cartridge (30) with a seal (52, 53) being positioned about a respective inlet port (42, 43) at a junction of said valve body (25) with said cartridge (30);
**characterized in that** the axis of each fluid inlet (2, 3) is angled at a non-perpendicular angle with respect to said complementarily shaped surface (39) of said valve body (25) to form inlet passages that are bent at the junction of said valve body (25) with said cartridge (30).

26. A mixing valve as defined in claim 25 further comprising:
said cartridge (30) being formed by an upper body member (45) and a lower body member (41) constructed to be connected together;
said lower and upper body members (41, 45) defining a slot (47) at a connection line therebetween;
said slot (47) being sized to receive a distal end (16, 17) of a pin (15) extending from said ball valve (11) when seated in said ball valve receiving cavity (37).

## Patentansprüche

1. Mischventil (20) für Flüssigkeiten, mit einem Kugelventil (11), das in einem Ventilaufnahmehohlraum (26) eines Ventilkörpers (25) verschwenkbar montiert ist, wobei der Körper eine Mehrzahl von Anschlüssen (2, 3, 4) hat, die in Fluidverbindung mit dem Hohlraum stehen, wobei das Kugelventil eine Mehrzahl von Öffnungen (12, 13, 14) in einer äußeren, zumindest teilweise kugelförmigen Ventilfläche (27) aufweist, wobei die Öffnungen mit den Anschlüssen zusammenwirken, um den Flüssigkeitsstrom durch die Anschlüsse zu steuern, wobei der Ventilkörper durch sich hindurch eine Steueröffnung (6) hat, durch die eine Längsachse des Ventilkörpers hindurch verläuft, wobei das Kugelventil einen ersten Vorsprung in Form eines Steuerschafts (10) aufweist, der daran angeschlossen ist und sich durch die Steueröffnung hindurch erstreckt, wobei eines der Teile Ventilkörper und Kugelventil einen zweiten Vorsprung (16) hat, der sich davon weg erstreckt und mit einem Schlitz (7) in dem anderen der Teile Ventilkörper und Kugelventil in Eingriff steht, **dadurch gekennzeichnet, daß** der zweite Vorsprung (16) und der Schlitz (7) derart angeordnet und winkelpositioniert sind, daß das Kugelventil auf eine Schwenkbewegung um die Längsachse und um eine Achse beschränkt ist, die senkrecht zu der Längsachse steht.

2. Mischventil nach Anspruch 1, wobei sich der zweite Vorsprung (16) von dem Kugelventil weg erstreckt.

3. Mischventil nach Anspruch 2, wobei der zweite Vorsprung (16) durch ein fernes Ende eines Stifts (15) ausgebildet ist, der durch das Kugelventil hindurch verläuft.

4. Mischventil nach Anspruch 2, wobei der Schlitz (7) in dem Ventilkörper ausgespart ist und seine zentrale Längsachse in einer Ebene liegt, die senkrecht zu der Längsachse verläuft.

5. Mischventil nach Anspruch 4, wobei der Stift (15) starr an dem Kugelventil befestigt ist.

6. Mischventil nach Anspruch 4,
wobei der Ventilkörper (25) eine Ventilkappe (5) hat, die mit einem Ventilgrundkörper (1) verbunden ist,
wobei die Ventilkappe die Zugangssteueröffnung durch sich hindurch aufweist,
wobei der Schlitz zwischen einer Verbindungsstelle der Ventilkappe und des Ventilgrundkörpers gebildet ist und
wobei der Schlitz eine begrenzte Umfangsrichtung um die Längsachse des Ventilkörpers aufweist, mit Schultern (18) an Umfangsenden des Schlitzes, um Anschläge für die Bewegung des zweiten Vorsprungs um die Längsachse zu bilden.

7. Mischventil nach Anspruch 6, wobei die Schultern durch einen ringförmigen, aufrechtstehenden Kragen (8) des Ventilgrundkörpers ausgebildet sind, der sich nach innen erstrekkende Schultern (18) aufweist.

8. Mischventil nach Anspruch 6, wobei die Schultern (18) durch einen teilweise ringförmigen Kragen (8) ausgebildet sind, der sich aufrecht von dem Ventilgrundkörper zu der Zugangssteueröffnung erstreckt, mit voneinander beabstandeten Umfangsenden (18) des Kragens, um zwischen sich teilweise den Schlitz (7) auszubilden, wobei gegenüberliegende Umfangsenden des Kragens die Schultern ausbilden, um die Anschläge für den zweiten Vorsprung (16) zu bilden.

9. Mischventil nach Anspruch 1,
wobei das Mischventil Kartuschenform aufweist, mit einer Kartusche (30), die ein unteres Körperteil (41) und ein oberes Körperteil (45) hat, welche miteinander verbunden sind und den Hohlraum für das Kugelventil bilden, und
wobei die Kartusche in einem Ventilgrundkörper (1) aufgenommen und darin durch ein Ventilkappenteil (5) gehalten ist.

10. Mischventil nach Anspruch 9,
wobei das untere Körperteil zwei Einlaßanschlüsse und einen Auslaßanschluß hat, wobei jeder der Einlaßanschlüsse (43, 45) eine Längsachse aufweist, die das Zentrum des Kugelventils schneidet, und
wobei das untere Ventilkörperteil eine untere Außenfläche (36) aufweist, mit einer derartigen Kontur, daß eine Mittelachse jedes Einlaßanschlusses die Kontur der unteren Außenfläche im rechten Winkel schneidet.

11. Mischventil nach Anspruch 10,
wobei die untere Außenfläche (36) kegelstumpfförmig ist,
wobei der Ventilgrundkörper (1) eine komplementär geformte Oberfläche (39) hat, um die untere Außenfläche aufzulagern,
wobei der Ventilgrundkörper Einlaßanschlüsse und einen Auslaßanschluß aufweist, die mit den jeweiligen Anschlüssen des unteren Ventilkörperteils für den Flüssigkeitsstrom ausgefluchtet sind, und
mit einer Dichtung (52, 53), die betriebsfähig um jeden Einlaß- und Auslaßanschluß herum angeordnet und zwischen dem Ventilgrundkörper (1) und dem unteren Ventilkörperteil (41) eingefügt ist, um abgedichtete Durchgangswege durch den Ventilgrundkörper und das untere Ventilkörperteil auszubilden.

12. Mischventil nach Anspruch 9,
wobei der Schlitz zwischen dem unteren und dem oberen Ventilkörperteil (41, 45) ausgebildet ist, und
wobei sich der zweite Vorsprung (16) von dem Kugelventil weg erstreckt.

13. Mischventil nach Anspruch 12, mit einer Platteneinrichtung (61), die ausgebildet ist, um den Steuerbereich des Ventils zu begrenzen, und an dem oberen Körperteil (45) der Kartusche montiert ist.

14. Mischventil nach Anspruch 9, mit einem Einstellring (70), der ausgebildet ist, um den auf einen zwischen dem Ring (70) und dem Kugelventil (11) eingefügten Dichtring (35) ausgeübten Druck einzustellen, und an dem oberen Ventilkörper (45) montiert ist.

15. Mischventil nach Anspruch 14, wobei der Einstellring (70) ein Montagemittel zur Montage einer Platteneinrichtung (61) aufweist, die ausgebildet ist, um den Steuerbereich des Ventils zu begrenzen.

16. Mischventil nach Anspruch 1, mit einer Platteneinrichtung (61), die ausgebildet ist, um den Steuerbereich des Ventils zu begrenzen, und in der Zugangssteueröffnung (76) montiert ist.

17. Mischventil nach Anspruch 1, mit einem Einstellring (70), der ausgebildet ist, um den auf einen zwischen dem Ring (70) und dem Kugelventil (11) eingefügten Dichtring (35) ausgeübten Druck einzustellen, und um die Zugangssteueröffnung (76) herum montiert ist.

18. Mischventil nach Anspruch 17, wobei der Einstellring (70) ein Montagemittel zur Montage einer Platteneinrichtung (61) aufweist, die ausgebildet ist, um den Steuerbereich des Ventils zu begrenzen.

19. Kugelventil für ein Mischventil, mit
einer Kugel, die eine im wesentlichen kugelförmige Ventilfläche (27) hat,
einer Mehrzahl von Öffnungen (12, 13, 14) in der Ventilfläche, die an einer festen Stelle an der Ventilfläche angeordnet sind und in Fluidverbindung miteinander stehen,
einem ersten Vorsprung (10), der sich von der Ventilfläche weg erstreckt und an einer festen Stelle an der Ventilfläche angeordnet ist, um das Kugelventil anzutreiben, wenn es in einem Ventilkörper montiert ist,
**dadurch gekennzeichnet, daß** sich ein zweiter Vorsprung (16) von der Ventilfläche weg erstreckt und an einer festen Stelle an der Ventilfläche (27) angeordnet ist, um die Bewegung des Kugelventils zu beschränken, wenn es in einem Ventilkörper montiert ist,
wobei der zweite Vorsprung (16) durch einen Stift (15) ausgebildet ist, der durch das Kugelventil hindurch verläuft und mindestens ein fernes Ende (16, 17) hat, das auf der Außenseite der kugelförmigen Ventilfläche angeordnet ist, und
wobei der Stift (15) senkrecht zu dem ersten Vorsprung (10) angeordnet ist und sich von dem Kugelventil in einem Winkel von im wesentlichen 90° bezüglich der Lage des ersten Vorsprungs weg erstreckt.

20. Kugelventil nach Anspruch 19, wobei der Stift (15) starr an dem Kugelventil befestigt ist.

21. Kugelventil nach Anspruch 19, wobei der Stift (15) durch das Kugelventil hindurch verläuft und mittig angeordnet ist, um durch das Zentrum des Kugelventils hindurch zu verlaufen.

22. Kugelventilkartusche (30) für ein Mischventil, wobei die Kartusche ein unteres Körperteil (41) und ein oberes Körperteil (45) hat, die ausgebildet sind, um miteinander verbunden zu sein, wobei das untere Körperteil eine innere, teilweise kugelförmige Ventilfläche (37) aufweist, die einen Kugelventilaufnahmehohlraum in Verbindung mit dem oberen Ventilkörperteil ausbildet, wobei das untere Körperteil mindestens zwei gerade Einlaßanschlüsse (42, 43, 54) durch sich hindurch aufweist, die frei von Krümmungen sind, wobei die Anschlüsse unterhalb des Zentrums des Kugelventilaufnahmehohlraums angeordnet sind und jeder eine Längsachse hat, die das Zentrum des Kugelventilhohlraums schneidet, wobei die untere Außenfläche (36) kegelstumpfförmig ist,
**dadurch gekennzeichnet, daß** das untere und das obere Körperteil einen Schlitz (47) an einer dazwischenliegenden Verbindungsstelle bilden, und
daß der Schlitz (47) dimensioniert ist, um ein fernes Ende (16) eines Stifts (15) aufzunehmen, der sich von einem Kugelventilteil (11) weg erstreckt, wenn es in dem Kugelventilaufnahmehohlraum sitzt.

23. Kugelventilkartusche für ein Mischventil nach Anspruch 22, mit
einem Kugelventilteil (11), welches einen Steuerschaft (10) hat, der sich davon nach auswärts und durch eine Steueröffnung (46) in dem oberen Körperteil (45) hindurch erstreckt,
wobei sich der Stift (15) von dem Kugelventilteil an einer im wesentlichen senkrechten Stelle bezüglich des Steuerschafts weg erstreckt und in dem Schlitz (47) der Kartusche aufgenommen ist.

24. Kugelventilkartusche für ein Mischventil nach Anspruch 23,
wobei der Stift an dem Kugelventilteil befestigt ist und
wobei das ferne Ende (16, 17) des Stifts im Querschnitt kreisförmig ist, um in dem Schlitz verschwenkbar zu sein.

25. Mischventil, mit
einem Ventilkörper (25), der eine Kartuschenaufnahmekammer hat,
einer austauschbaren Kartusche (30), die in der Kammer des Ventilkörpers (25) sitzt, wobei die Kartusche (30) einen Kugelventilaufnahmehohlraum (37) aufweist,
einem Kugelventil (11), welches in dem Kugelventilaufnahmehohlraum (37) verschwenkbar montiert ist,
wobei die Kartusche (30) mindestens zwei Einlaßanschlüsse (42, 43) hat, die durch sie gerade und frei von Krümmungen hindurch verlaufen, wobei jeder Anschluß eine Längsachse aufweist, die das Zentrum des Kugelventilaufnahmehohlraums (37) schneidet,
wobei die Kartusche (30) eine untere Außenfläche (36) hat, welche eine derartige Kontur aufweist und derart positioniert ist, daß die Achsen der Einlaßanschlüsse (42, 43) die Kontur der unteren Fläche im rechten Winkel schneiden,
wobei der Ventilkörper (25) Flüssigkeitseinlässe (2, 3) hat, die durch ihn hindurch verlaufen, und eine Oberfläche (39) aufweist, welche bezüglich der unteren Fläche (36) der Kartusche (30) komplementär geformt ist und die untere Fläche (36) der Kartusche auflagert,
wobei die Flüssigkeitseinlässe (2, 3) des Ventilkörpers (25) mit den jeweiligen Einlaßanschlüssen (42, 43) in der Kartusche (30) in Fluidverbindung stehen, wobei eine Dichtung (52, 53) um einen jeweiligen Einlaßanschluß (42, 43) herum an einer Verbindungsstelle des Ventilkörpers (25) mit der Kartusche (30) angeordnet ist,
**dadurch gekennzeichnet, daß** die Achse jedes Flüssigkeitseinlasses (2, 3) bezüglich der komplementär geformten Oberfläche (39) des Ventilkörpers (25) in einem nicht-rechtwinkligen Winkel angestellt ist, um Einlaßdurchgänge auszubilden, die an der Verbindungsstelle des Ventilkörpers (25) mit der Kartusche (30) gekrümmt sind.

26. Mischventil nach Anspruch 25,
wobei die Kartusche (30) durch ein oberes Körperteil (45) und ein unteres Körperteil (41) gebildet ist, die ausgebildet sind, um miteinander verbunden zu sein,
wobei das untere und das obere Körperteil (41, 45) einen Schlitz (47) an einer dazwischenliegenden Verbindungslinie bilden,
wobei der Schlitz (47) dimensioniert ist, um ein fernes Ende (16, 17) eines Stifts (15) aufzunehmen, der sich von dem Kugelventil (11) weg erstreckt, wenn es in dem Kugelventilaufnahmehohlraum (37) sitzt.

## Revendications

1. Robinet mitigeur (20) pour liquides, comportant une valve à rotule (11) montée en pivot dans une réceptacle pour valve (26) d'un corps de robinet (25), ledit corps comportant une pluralité d'orifices (2,3,4) de communication de fluide avec ledit réceptacle, ladite valve à rotule comportant une pluralité d'ouvertures (12,13,14) à la surface extérieur de valve au moins partiellement sphérique (27), lesdites ouvertures coopérant avec lesdits orifices pour contrôler le flux de liquide au travers desdits orifices, ledit corps de robinet comportant une ouverture de commande (6) au travers, avec un axe longitudinal dudit corps de robinet passant au travers de ladite ouverture de commande, ladite valve à rotule comportant un premier élément en saillie sous la forme d'une tige de commande (10) qui y est connectée, et qui s'étant au travers de ladite ouverture de commande, l'un desdits corps de robinet et valve à rotule comportant un second élément en saillie (16) s'étendant à partir de celui-ci et s'engageant dans une fente (7) de l'autre côté dudit corps de robinet ou de ladite valve à rotule ;
caractérisé en ce que
ledit second élément en saillie (16) et ladite fente (7) sont positionnés et orientés de telle manière, que ledit valve à rotule est contraint à un mouvement de pivot autour dudit axe longitudinal et autour d'un axe perpendiculaire audit axe longitudinal.

2. Robinet mitigeur selon la revendication 1, caractérisé en outre, en ce que ledit élément en saillie (16) s'étend à partir de ladite valve à rotule.

3. Robinet mitigeur selon la revendication 2, caractérisé en ce que ledit second élément en saillie est formé par une extrémité distale d'un axe (15) qui passe au travers de ladite valve à rotule.

4. Robinet mitigeur selon la revendication 2, caractérisé en outre, en ce que ladite fente (7) est formée par un renfoncement dans ledit corps de robinet, et son axe central longitudinal est disposé dans un plan qui est perpendiculaire audit axe longitudinal.

5. Robinet mitigeur selon la revendication 4, caractérisé en outre, en ce que ladite fente (15) est fixée de manière rigide à ladite valve à rotule.

6. Robinet mitigeur selon la revendication 4, caractérisé en outre, en ce que:
ledit corps de robinet (25) comporte un couvercle de robinet (5) connecté à un élément de base du robinet (1) ;
ledit couvercle comporte ladite ouverture de commande d'accès en son travers,
ladite fente est définie entre un raccordement dudit couvercle de valve et dudit élément de base de robinet ; et
ladite fente a une direction circonférencielle limitée autour dudit axe longitudinal dudit corps de robinet muni d'épaulement (18) aux extrémités circonférencielles de ladite fente, pour définir des butées pour le mouvement dudit second élément en saillie autour dudit axe longitudinal.

7. Robinet mitigeur selon la revendication 6, caractérisé en outre, en ce que lesdits épaulements sont formés par une bague annulaire droite (8) dudit élément de base du robinet comportant des épaulements s'étendant vers l'intérieur.

8. Robinet mitigeur selon la revendication 6, caractérisé en outre en ce que lesdits épaulements (18) sont formés par une bague partiellement annulaire (8) s'étendant tout droit à partir dudit élément de base du robinet jusqu'à ladite ouverture de contrôle d'accès, avec des extrémités circonférencielles (18) de -ladite bague espacées pour constituer partiellement entre elles ladite fente (7), avec les extrémités circonférentielles opposées de ladite bague formant lesdits épaulements pour définir lesdites butées pour ledit second élément en saillie (16).

9. Robinet mitigeur selon la revendication 1, caractérisé en outre en ce que :
ledit robinet mitigeur est disposé sous forme de cartouche, avec une cartouche (30) comportant un élément de corps inférieur (41) et un élément de corps supérieur (45) connectés l'un à l'autre, et définissant ledit réceptacle pour ladite valve à rotule ; et
ladite cartouche est recueillie dans un élément de base du robinet (1) et est maintenue à l'intérieur par un élément de couvercle de valve (5).

10. Robinet mitigeur selon la revendication 9, caractérisé en outre, en ce que :
ledit élément de corps inférieur comporte deux orifices d'admission et un orifice d'évacuation, chacun desdits orifices (43,45) comportant un axe longitudinal coupant le centre de ladite valve à rotule ; et
ledit élément de corps supérieur de robinet comporte une surface extérieure inférieure (36) avec un contour tel qu'un axe central de chaque orifice d'arrivée coupe ledit contour de surface extérieure inférieure à angle droit.

11. Robinet mitigeur selon la revendication 10, caractérisé en outre, en ce que :
ladite surface extérieure inférieure (36) est de forme tronconique ;
ledit élément de base de robinet (1) comporte une surface de forme complémentaire (39), pour s'ajuster à ladite surface extérieure inférieure ;
ledit élément de base de robinet comporte des orifices d'admission et un orifice d'évacuation de fluide alignés avec les orifices respectifs dudit élément de corps de robinet inférieur ; et
un joint (52,53) positionné autour de chaque orifice d'admission et d'évacuation, et interposé entre ledit élément de base du robinet (1) et ledit élément de corps inférieur du robinet (41), pour former des passages fermés hermétiquement au travers dudit élément de base du robinet et dudit élément de corps inférieur du robinet.

12. Robinet mitigeur selon la revendication 9, caractérisé en outre en ce que :
ladite fente est formée entre lesdits éléments de corps du robinet inférieur et supérieur (41,45) ; et
ledit second élément en saillie (16) s'étend à partir de ladite valve à rotule.

13. Robinet mitigeur selon la revendication 12, caractérisé en ce qu'il comporte en outre un dispositif de plaque (61) agencé pour limiter le champ de contrôle de la valve, et qui est montée sur ledit élément de corps supérieur (45) de ladite cartouche.

14. Robinet mitigeur selon la revendication 9, caractérisé en ce qu'il comporte en outre, un anneau de régulation (70) agencé pour contrôler la pression exercée sur un joint d'étanchéité (35) interposé entre l'anneau (70) et la valve à rotule (11), et qui est monté sur ledit corps de robinet supérieur (45).

15. Robinet mitigeur selon la revendication 14, caractérisé en outre, en ce que ledit anneau de régulation (70) comporte un moyen de montage pour monter un dispositif de plaque (61) agencé pour limiter le champ de contrôle de la valve.

16. Robinet mitigeur selon la revendication 1, caractérisé en ce qu'il comporte en outre, un dispositif de plaque (61) agencé pour limiter le champ de contrôle de la valve, et qui est monté dans ladite ouverture de contrôle d'accès (76).

17. Robinet mitigeur selon la revendication 1, caractérisé en ce qu'il comporte en outre, un anneau de régulation (70) agencé pour contrôler la pression exercée sur un joint d'étanchéité (35) interposé entre l'anneau (70) et la valve à rotule (11), et qui est monté autour de ladite ouverture de contrôle d'accès (76).

18. Robinet mitigeur selon la revendication 17, caractérisé en outre, en ce que ledit anneau de régulation (70) comporte un moyen de montage pour monter un dispositif de plaque (61) qui est agencé pour limiter le champ de contrôle de la valve.

19. Valve à rotule pour robinet mitigeur, munie d'une rotule comportant une surface de valve de forme essentiellement sphérique (27) ; une pluralité d'ouvertures (12,13,14) dans ladite surface de valve, situés à des emplacements fixés sur ladite surface de valve, et en communication fluide les unes avec les autres ; un premier élément en saillie (10) s'étendant à partir de ladite surface de valve, et situé à un emplacement fixé sur ladite surface de valve pour commander ladite valve à rotule lorsqu'elle est montée sur un corps de robinet ;
caractérisé en ce qu'un second élément en saillie (16) s'étend à partir de ladite surface de valve, et est situé à un emplacement fixé sur ladite surface de valve (27), pour contraindre le mouvement de ladite valve à rotule lorsqu'elle est montée dans un corps de robinet ;
ledit second élément en saillie (16) est formé d'un axe (15) passant au travers de ladite soupape à rotule, et comporte au moins une extrémité distale (16,17) positionnée à l'extérieur de la surface de valve sphérique ; et
ledit axe (15) est positionnée perpendiculairement audit premier élément de projection (10) et s'étend à partir de ladite valve à rotule à, essentiellement, 90 degrés par rapport à la position dudit premier élément en saillie.

20. Valve à rotule selon la revendication 19, caractérisé en outre, en ce que ledit axe (15) est fixé de façon rigide à ladite valve à rotule.

21. Valve à rotule selon la revendication 19, caractérisée en outre, en ce que ledit axe (15) passe au travers de ladite valve à rotule, et est positionné de façon centrale pour passer au travers du centre de ladite valve à rotule.

22. Cartouche de valve à rotule (30) pour un robinet mitigeur, ladite cartouche comportant un élément de corps inférieur (41) et un élément de corps supérieur (45) agencé pour être connectés l'un à l'autre ; ledit élément de corps inférieur comportant une surface de valve interne partiellement sphérique (37) qui forme un réceptacle de valve à rotule en association avec ledit élément de corps de valve supérieur ; ledit élément de corps inférieur comportant au moins deux orifices d'admission rectilignes (42,43,54) au travers, qui ne comportent pas de coudes, lesdits orifices étant positionnés sous le centre dudit réceptacle de valve à rotule, et chacun comportant un axe longitudinal coupant le centre dudit réceptacle de valve à rotule ; ladite surface extérieure inférieure (36) étant de forme tronconique ; caractérisé en ce que
lesdits éléments de corps inférieurs et supérieurs définissent une fente (47) à un raccordement entre eux ; et
ladite fente (47) est dimensionnée pour recevoir une extrémité distale (16) d'un axe (15) s'étendant à partir d'un élément de valve à rotule (11) lorsqu'il est ajusté dans ledit réceptacle de valve à rotule.

23. Cartouche de valve à rotule pour robinet mitigeur, selon la revendication 22, caractérisé en ce qu'elle comporte en outre un élément de valve à rotule (11) qui comporte une tige de commande (10) s'étendant vers son extérieur, et au travers d'une ouverture de commande (46) dans ledit élément de corps supérieur (45) ; et
ledit élément de valve à rotule comportant ledit axe (15) s'étendant à partir de celui-ci, dans une position essentiellement perpendiculaire à la tige de commande et étant reçu dans ladite fente (47) de ladite cartouche.

24. Cartouche de valve à rotule pour robinet mitigeur, selon la revendication 23, caractérisée en outre, en ce que
ledit axe est fixé audit élément de valve à rotule ; et
ladite extrémité distale (16,17) dudit axe est de section circulaire pour pouvoir pivoter dans ladite fente.

25. Robinet mitigeur comportant
un corps de valve (25) comportant une chambre de réception de cartouche ;
une cartouche remplaçable (30) ajustée dans la chambre dudit corps de valve (25), ladite cartouche (30) comportant un réceptacle de valve à rotule (37) ;
une valve à rotule (11) montée en pivot dans ledit réceptacle de valve à rotule (37) ;
ladite cartouche (30) comportant au moins deux orifices d'admission (42,43) passant tout droit au travers et sans courbures, chaque orifice comportant un axe longitudinal coupant le centre dudit réceptacle de valve à rotule (37) ;
ladite cartouche (30) comportant une surface extérieure inférieure (36) avec un contour, et positionnée de manière à ce que lesdits axes desdits orifices d'admission (42,43) coupent le contour de la surface inférieure à angle droit ;
ledit corps de valve (25) comportant des orifices d'admission de fluide (2,3) passant au travers, et comportant une surface (39) de forme complémentaire par rapport à ladite surface inférieure (36) de ladite cartouche (30), qui s'ajuste à ladite surface inférieure de la cartouche (36) ;
lesdits orifices d'admission de fluide (2,3) dudit corps de valve (25) étant en communication fluide avec les orifices d'admission respectifs (42,43) dans ladite cartouche (30), avec un joint (52,53) positionné autour d'un orifice d'admission respectif (42,43) à un raccordement dudit corps de valve (25) avec ladite cartouche (30),
caractérisé en ce que l'axe de chaque orifice d'admission de fluide (2,3) fait un angle non-droit avec ladite surface de forme complémentaire (39) dudit corps de valve (25) pour former des passages d'admission qui sont courbés au niveau du raccordement dudit corps de valve (25) avec ladite cartouche (30).

26. Robinet mitigeur selon la revendication 25, caractérisé en outre en ce que :
ladite cartouche (30) est formée par un élément de corps supérieur (45) et un élément de corps inférieur (41) disposés pour être connectés l'un à l'autre ;
lesdits éléments supérieurs et inférieurs (41,45) définissant une fente (47) au niveau de la ligne entre eux ;
ladite fente (47) étant dimensionnée pour recevoir une extrémité distale (16,17) d'un axe (15) s'étendant à partir dudit corps de valve (11) lorsqu'il est ajusté dans ledit réceptacle de corps de valve (37).
